# EUROPEAN PATENT APPLICATION

(11) **EP 3 855 312 A1**
(43) Date of publication of application: **28.07.2021**
(21) Application number: 19867154.7
(22) Date of filing: 08.07.2019
(51) Int. Cl.: G06F 9/451, H04L 29/06

(54) **INFORMATION PROCESSING METHOD, DEVICE, STORAGE MEDIUM, ELECTRONIC DEVICE AND SYSTEM**

(30) Priority: 29.09.2018 CN 201811152476
(71) Applicant: GUANGDONG OPPO MOBILE TELECOMMUNICATIONS CORP., LTD., Dongguan Guangdong 523860 (CN)
(72) Inventor: LI, Senlin, Dongguan, Guangdong 523860 (CN)
(74) Representative: Ipside
(86) International application number: PCT/CN2019/095134
(87) International publication number: WO 2020/063019

(57) **Abstract**

The present application discloses an information processing method, comprising: generating a rendering instruction when receiving an instruction on displaying a native page; sending the rending instruction to a server, and receiving display parameters returned by the server after analysis of a global configuration file matched with the rendering instruction; and rendering the display parameters to obtain and display the native page.

## Description

The present application claims priority of Chinese Patent Application No. 201811152476.1, in the title of "INFORMATION PROCESSING METHOD, DEVICE, STORAGE MEDIUM, ELECTRONIC DEVICE AND SYSTEM", filed on September 29, 2018, in the National Intellectual Property Administration of China, the entire contents of which are hereby incorporated by reference in its entirety.

### TECHNICAL FIELD

The present disclosure relates to the field of information technologies, and in particular to an information processing method, a device, a storage medium, an electronic device, and a system.

### BACKGROUND

With the continuous development of electronic technology, the functions of electronic devices such as mobile phones are becoming more and more powerful. Users can browse native pages of an application through various quick applications, browsing such as text information, image information, audio and video information, and cards information, etc.

At present, when a mobile phone browses a native page through a quick application, a rendering engine in the current application is required for a real-time analysis and rendering of the code of the quick application. Due to the variety of applications, the type of rendering engine used may not be the same, such that a number of rendering engines are required to be stored, resulting in waste of storage space.

### SUMMARY OF THE DISCLOSURE

The present disclosure provides an information processing method, a device, a storage medium, an electronic device, and a system to improve the rendering efficiency of the native page and saving storage space.

In a first aspect, the present disclosure provides an information processing method, applied to an electronic device and including:
generating a rendering instruction in response to a display instruction of a native page being received;
sending the rendering instruction to a server, and receiving a display parameter returned by the server after parsing based on a global configuration file, the global configuration file being matched with the rendering instruction; and
rendering the display parameter to obtain and display the native page.

In a second aspect, the present disclosure provides an information processing method, applied to a server and including:
receiving a rendering instruction sent by an electronic device;
obtaining a global configuration file corresponding to the rendering instruction by matching, and generating a display parameter by parsing the corresponding global configuration file; and
sending the display parameter to the electronic device.

In a third aspect, the present disclosure provides an information processing device, applied to an electronic device and including:
a generating unit, configured to generate a rendering instruction in response to a display instruction of a native page being received;
a transceiver unit, configured to send the rendering instruction to a server and receive a display parameter returned by the server after parsing based on a global configuration file, the global configuration file being matched with the rendering instruction; and
a display unit, configured to render the display parameter to obtain and display the native page.

In a fourth aspect, the present disclosure provides an information processing device, applied to a server and including:
a receiving unit, configured to receive a rendering instruction sent by an electronic device;
a matching unit, configured to match based on the rendering instruction to obtain a corresponding global configuration file, and parse the global configuration file to generate a display parameter; and
a sending unit, configured to send the display parameter to the electronic device.

In a fifth aspect, the present disclosure provides a storage medium, storing a computer program, wherein the computer program is executed on a computer to cause the computer to perform the information processing method according to any embodiment of the present disclosure.

In a sixth aspect, the present disclosure provides an electronic device, including a memory and a processor, wherein the processor is capable of calling a computer program stored in the memory to perform:
generating a rendering instruction in response to a display instruction of a native page being received;
sending the rendering instruction to a server, and receiving a display parameter returned by the server after parsing based on a global configuration file, the global configuration file being matched with the rendering instruction; and
rendering the display parameter to obtain and display the native page.

In a seventh aspect, the present disclosure, provides an information processing system, including an electronic device and a server; wherein the electronic device includes the information processing device according to the third aspect and the server includes the information processing device according to the fourth aspect.

### BRIEF DESCRIPTION OF THE DRAWINGS

The technical solutions and other beneficial effects of the present disclosure will be apparent through the detailed description of the specific embodiments of the present disclosure in conjunction with the accompanying drawings.
FIG. 1 is system architecture view of an electronic device according to an embodiment of the present disclosure.
FIG. 2 is a flow chart of an information processing method according to an embodiment of the present disclosure.
FIG. 3 is a flow chart of an information processing method according to another embodiment of the present disclosure.
FIG. 4 is a flow chart of an information processing method according to an embodiment of the present disclosure.
FIG. 5 is a sequence view of an information processing method according to an embodiment of the present disclosure.
FIG. 6 is a schematic block view of an information processing device according to an embodiment of the present disclosure.
FIG. 7 is a schematic block view of an information processing device according to an embodiment of the present disclosure.
FIG. 8 is a structural schematic view of an electronic device according to an embodiment of the present disclosure.
FIG. 9 is a structural schematic view of an electronic device according to another embodiment of the present disclosure.
FIG. 10 is a schematic block view of an information processing system according to an embodiment of the present disclosure.

### DETAILED DESCRIPTION

Referring to the drawings, where same component symbols represent same components. The principle of the present disclosure is illustrated by implementation in an appropriate computing environment. The following description is based on the illustrated specific embodiments of the present disclosure, which should not be considered as limiting other specific embodiments not detailed herein.

Terms of "module" used in the present disclosure may be regarded as a software object executed on a computing system. Different components, modules, engines and services described herein may be regarded as implementation objects on the computing system. The device and method described herein are preferably implemented in the form of software, and of course may also be implemented in hardware, which are all within the scope of the present disclosure.

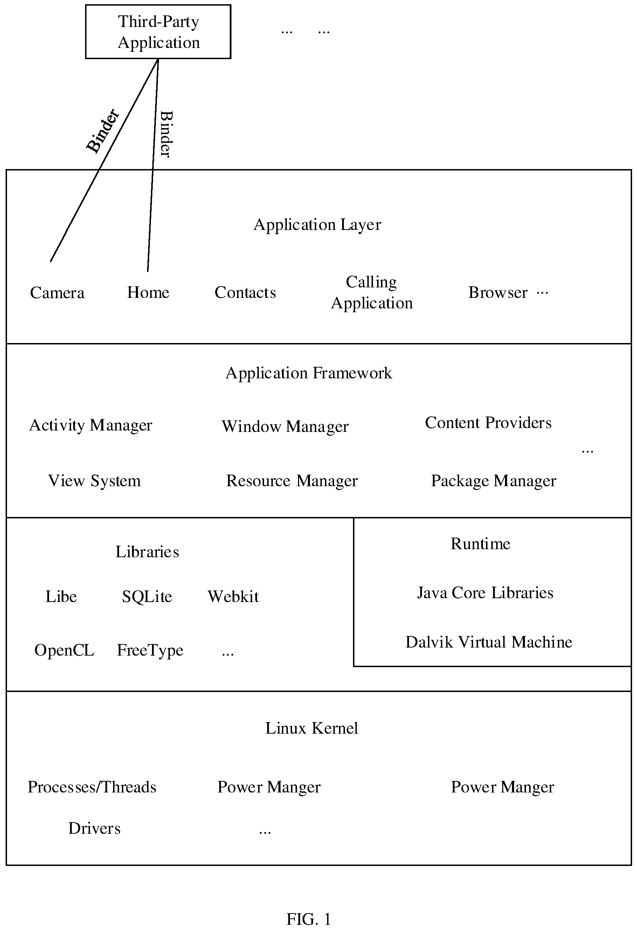

Referring to FIG. 1, FIG. 1 is system architecture view of an electronic device according to an embodiment of the present disclosure. The system architecture may be an Android system architecture. In some embodiments, the system architecture may also be an iPhone operating system (IOS) framework, etc. The Android system architecture is an architecture of an Android system. The Android system architecture, like the operating system thereof, is configured with a layered architecture. The layered architecture is divided into four layers, from high to low being an Android Application layer, an Android Application framework Layer, an Android system runtime layer and a Linux kernel layer.

The Application layer: An application is a program written in java language, the application running on virtual machines, such as a camera application, an email client, a short message service (SMS) program, and a calendar.

The Application framework layer: This layer is an application programming interface (API) framework used when writing a core application released by Google. Developers may also use these frameworks to develop their own applications, which simplifies a structure design of program development, but must follow a development principle of the frameworks.

The system runtime library (C/C ++ library and Android runtime library) layer: When the Android application framework is used, the Android system will support each used component through some C/C ++ libraries for better service, such as SQLite (a relational database), Webkit (a web browser engine).

The Linux kernel layer: Core system services of the Android system are given to the Linux2.6 kernel, such as security, memory management, process management, network protocol stack, and driver model, etc., and all depend on the kernel. For example, a Binder internet process connection (IPC) driver, which is a special driver for Android, has a separate device node and provides the function of inter-process communication.

The transmission of display information between different applications, such as a transmission of information between a camera application and a desktop application, requires the Binder communication method to transmit the information across processes. It should be noted that due to the inconsistency of the rendering engines used between different applications, the information passed may not be opened in another application due to compatibility issues. Moreover, each application has a corresponding rendering engine, which may cause the storage space of software development kit (SDK) of the application to increase, and further leads to an increase in the storage space of the application installation package, wasting the storage space of the electronic device. Therefore, the problems of compatibility and storage space are required to be solved.

It should be noted that the SDK is generally a collection of development tools when some software engineers develop application software for specific software packages, software frameworks, hardware platforms, operating systems, etc.

A specific description will be given below.

In the embodiment, the description will be made from the perspective of an information processing device, which may be specifically integrated in electronic device, such as a mobile phone, a tablet computer, a personal digital assistant (PDA), etc.

An embodiment of the present disclosure provides an information processing method, applied to an electronic device and including:
generating a rendering instruction in response to a display instruction of a native page being received;
sending the rendering instruction to a server, and receiving a display parameter returned by the server after parsing based on a global configuration file, the global configuration file being matched with the rendering instruction; and
obtaining the native page by rendering the display parameter and displaying the native page.

In some embodiments, the rendering instruction carries a page identifier, and the sending the rendering instruction to the server, and receiving the display parameter returned by the server after parsing based on the global configuration file may include: sending the rendering instruction to the server to cause the server to match a corresponding global configuration file based on the page identifier carried by the rendering instruction and parse the corresponding global configuration file; and receiving the display parameter generated by the server after the parsing the corresponding global configuration file.

In some embodiments, the receiving the display parameter generated by the server after the parsing the corresponding global configuration file may include: receiving the display parameter generated by the server after parsing the corresponding global configuration file based on a preset script framework, the display parameter including a command set.

In some embodiments, the obtaining the native page by rendering the display parameter and displaying the native page may include: obtaining target information in order by traversing and rendering the command set in the display parameter based on a preset rule; and obtaining the native page by drawing the target information in an order of acquisition time and displaying the native page.

In some embodiments, the obtaining the native page by rendering the display parameter and displaying the native page may include: generating a plurality of controls with display effects corresponding to display positions by rendering the display parameter, wherein each of the plurality of controls comprises functional logic; and obtaining the native page according to the plurality of controls and displaying the native page.

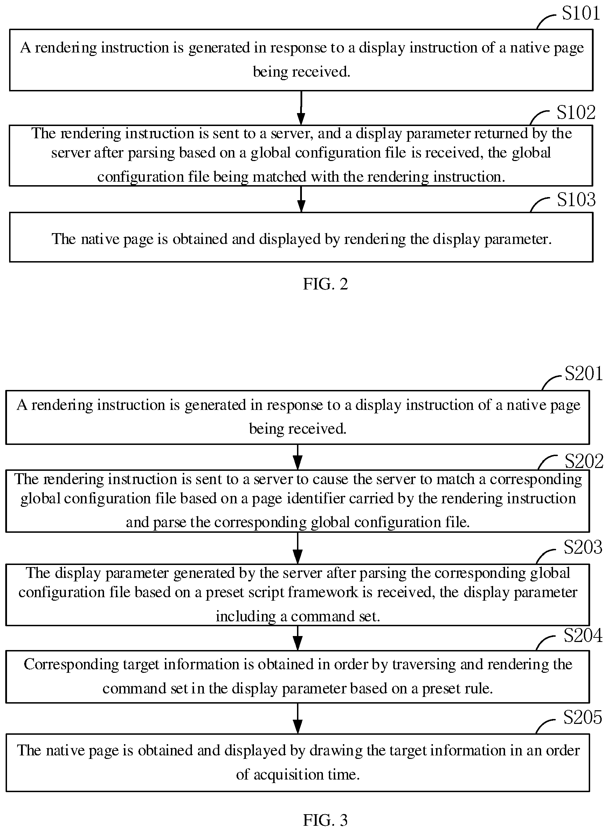

An embodiment of the present disclosure provides an information processing method. The information processing method, which is applied to an electronic device, may include operations at blocks illustrated in FIG. 2.

At block S101, a rendering instruction is generated in response to a display instruction of a native page being received.

The native page may refer to the native page of an application opened by a quick application. The quick application refers to one that a user does not need to download and install, rather click and use, and enjoy the performance experience of the native application in real time, which can greatly save the storage space of the electronic device, and achieve a "slimming" effect on the electronic device.

Further, when the user performs the operation of opening the native page for the first time, the electronic device generates and receives the display instruction of the native page, correspondingly generates the rendering instruction. The rendering instruction includes a page identifier of the native page to be generated.

At block S102, the rendering instruction is sent to a server, and a display parameter returned by the server after parsing based on a global configuration file is received, the global configuration file being matched with the rendering instruction.

It should be noted that in the existing processing method, after generating the rendering instruction, the global configuration file corresponding to the native page is required to be downloaded to the electronic device. The global configuration file is parsed by a rendering engine in a third-party application to generate the native page. The global configuration file contains code information corresponding to elements of the native page.

In the embodiment of the present disclosure, after the rendering instruction is generated, the rendering instruction is sent to the server, such that the server matches the corresponding global configuration file based on the page identifier indicated by the rendering instruction. The global configuration file is parsed via the rendering engine in the server, and the display parameter that can be directly read by the electronic device is generated. In some embodiments, the display parameter includes attribute information corresponding to generated controls. The attribute information includes logic and layout of the controls. The logic is a functional logic and the like of the controls. The layout is a display position, a display effect, and the like of the controls.

Further, after the server generates the display parameter, the server may return the display parameter to the electronic device.

In some embodiments, the rendering instruction carries a page identifier, and the sending the rendering instruction to the server, and receiving the display parameter returned by the server after parsing based on the global configuration file may include:
(1) sending the rendering instruction to the server to cause the server to match a corresponding global configuration file based on the page identifier carried by the rendering instruction and parse the corresponding global configuration file; and
(2) receiving the display parameter generated by the server after the parsing the corresponding global configuration file.

The rendering instruction is sent to the server. Since the rendering instruction carries the page identifier of the native page, when the server receives the rendering instruction, the server may match based on the page identifier to obtain the global configuration file corresponding to the page identifier. The global configuration file is parsed via the rendering engine in the server, and a number of control instructions are generated, which can form the layout and logic of the entire native page. The control instructions compose the display parameter. The server returns the display parameter to the electronic device sending the rendering instruction.

Further, the electronic device may receive and save the display parameter returned by the server. In some embodiments, the electronic device may set a preset storage space to specifically store the corresponding display parameter, such that the corresponding display parameter can be quickly and accurately found later.

In some embodiments, the receiving the display parameter generated by the server after the parsing the corresponding global configuration file may include: receiving the display parameter generated by the server after parsing the corresponding global configuration file based on a preset script framework, the display parameter including a command set.

The server may be integrated with a preset script framework. In some embodiments, the preset script framework may be a JavaScript script language framework. The JavaScript is a scripting language belonging to Internet and has been widely used in Web application development. The JavaScript is commonly used to add various dynamic functions to web pages to provide the user with a smoother and more beautiful browsing effect. Therefore, the JavaScript scripting language framework can parse the global configuration file and generate the display parameter including the command set. The command set may be a number of character strings, and each character string may represent the display style and display position of one control.

In some embodiments, the command set may also be a drawn image, such as a JPEG format picture, etc. Based on this, the electronic device may directly place the drawn image in a corresponding position to generate the native page.

At block S103, the native page is obtained and displayed by rendering the display parameter.

After receiving the display parameter, since the display parameter is the display parameter generated after the server side is parsed by the rendering engine, the parsed display parameter can be directly executed by a processor of the electronic device to generate a number of controls arranged in a certain layout, and then obtain and display the native page.

In some embodiments, the display parameter includes attribute information corresponding to the generated controls. The attribute information includes the logic and layout of the controls. The logic is a functional logic and the like of the controls. The layout is a display position, a display effect, and the like of the controls. Therefore, after rendering the display parameter, the controls with display effects corresponding to arranged display positions are generated, and each control contains specific functional logic. The controls of the display are combined to form and display the native page.

In some embodiments, the rendering the display parameter to obtain and display the native page may include:
(1) traversing and rendering the command set in the display parameter based on a preset rule to obtain corresponding target information in order;
(2) drawing the target information in an order of acquisition time to obtain and display the native page.

The code command set in the display parameter is traversed and rendered based on a rule from top to bottom to obtain the target information (such as display controls) from the top to the bottom of the page and from the left to the right. The display controls may include display position, display text, and display effect.

Further, the display controls are drawn one by one in the page according to an order of the acquisition time based on the display effect and display position, forming a streamlined drawing order from top to bottom, such that the native page may be displayed in a progressive manner. In this way, the phenomenon of white screen for a long time may not occur, improving the user experience.

Since the global configuration file corresponding to the native page to be displayed in the electronic device is uniformly analyzed by the rendering engine in the server, the third-party application in the electronic device does not need to store the rendering engine, thereby reducing the storage space of the application installation file and thus saving the storage space of the electronic device.

As can be seen from the above, the information processing method provided by the embodiments includes: generating a rendering instruction in response to a display instruction of a native page being received; sending the rendering instruction to a server, and receiving a display parameter returned by the server after parsing based on a global configuration file, the global configuration file being matched with the rendering instruction; and rendering the display parameter to obtain and display the native page. In this way, when receiving the display instruction of the native page, the rendering instruction is sent to the server, such that the server side matches the corresponding global configuration file based on the rendering instruction, and the server side parses the global configuration file and returns the display parameter to directly render the display parameter and generate the native page, which improves the rendering efficiency of the electronic device to the native page, and saves the rendering engine, thereby saving the storage space.

According to the method described in the above embodiments, the following examples are provided for further detailed description.

Referring to FIG. 3, which is a flow chart of an information processing method according to another embodiment of the present disclosure.

Specifically, the method may include operations at blocks illustrated in FIG. 3.

At block S201, a rendering instruction is generated in response to a display instruction of a native page being received.

It should be noted that, in order to better explain the embodiment, the electronic device will be described using a mobile phone as an example.

When the mobile phone detects that the user performs the operation of opening the native page for the first time, the electronic device generates the display instruction of the native page, and correspondingly generates the rendering instruction. The rendering instruction may carry a page identifier corresponding to the native page to be generated.

At block S202, the rendering instruction is sent to a server to cause the server to match a corresponding global configuration file based on a page identifier carried by the rendering instruction and parse the corresponding global configuration file.

The mobile phone sends the rendering instruction to the server, the server storing a number of global configuration files. Each global configuration file is associated with a corresponding page identifier, and each global configuration file is a computer code form of the generation form of a corresponding native page. Therefore, when the server receives the rendering instruction, the server may match based on the page identifier carried by the rendering instruction, find the corresponding global configuration file, and parse the global configuration file through the JavaScript script language framework in the server to parse the global configuration file into the display parameter including the command set.

At block S203, the display parameter generated by the server after parsing the corresponding global configuration file based on a preset script framework is received, the display parameter including a command set.

The mobile phone may receive the display parameter including the command set after the server parses the corresponding global configuration file through the JavaScript script language framework. Since the command set has been parsed by the JavaScript script language framework on the server side, the mobile phone can directly render the command set of the display parameter to obtain a corresponding control.

At block S204, corresponding target information is obtained in order by traversing and rendering the command set in the display parameter based on a preset rule.

The mobile phone may traverse and render the obtained command set in an order of receiving time, and obtain the target information (such as control information) got by rendering the corresponding command set in a rendering order. The control information includes display effect data and display position data, such as "Addtext (XX text data) (YY position data)" indicating adding a text control. The XX text is displayed on the file control, and specifically displayed on the YY position.

At block S205, the target information is drawn in an order of acquisition time to obtain and display the native page.

The mobile phone draws the target information one by one in the display page of the mobile phone according to an order of the acquisition time, forming a streamlined drawing order from top to bottom, such that the native page may be displayed in a progressive manner. In this way, the phenomenon of white screen for a long time may not occur.

As can be seen from the above, the information processing method provided by the embodiments includes: generating a rendering instruction in response to a display instruction of a native page being received; sending the rendering instruction to a server, and receiving the display parameter generated by the server after parsing the corresponding global configuration file based on a preset script framework, the display parameter including a command set; rendering the command set in the display parameter in an order of receiving time to obtain corresponding target information in order; drawing the target information in an order of acquisition time to obtain the native page and display the same in a progressive manner. In this way, when receiving the display instruction of the native page, the rendering instruction is sent to the server, such that the server side matches the corresponding global configuration file based on the rendering instruction, and the server side parses the global configuration file and returns the display parameter to directly render the display parameter and generate the native page, which improves the rendering efficiency of the electronic device to the native page, and saves the rendering engine, thereby saving the storage space.

An embodiment of the present disclosure provides an information processing method, applied to a server and including:
receiving a rendering instruction sent by an electronic device;
obtaining a global configuration file corresponding to the rendering instruction by matching, and generating a display parameter by parsing the corresponding global configuration file; and
sending the display parameter to the electronic device.

In some embodiments, the rendering instruction carries a page identifier, and the matching based on the rendering instruction to obtain the corresponding global configuration file, and parsing the global configuration file to generate the display parameter may include: matching based on the page identifier carried by the rendering instruction to obtain the corresponding global configuration file to the page identifier; and parsing the global configuration file based on a preset script framework to generate a corresponding display parameter including a command set.

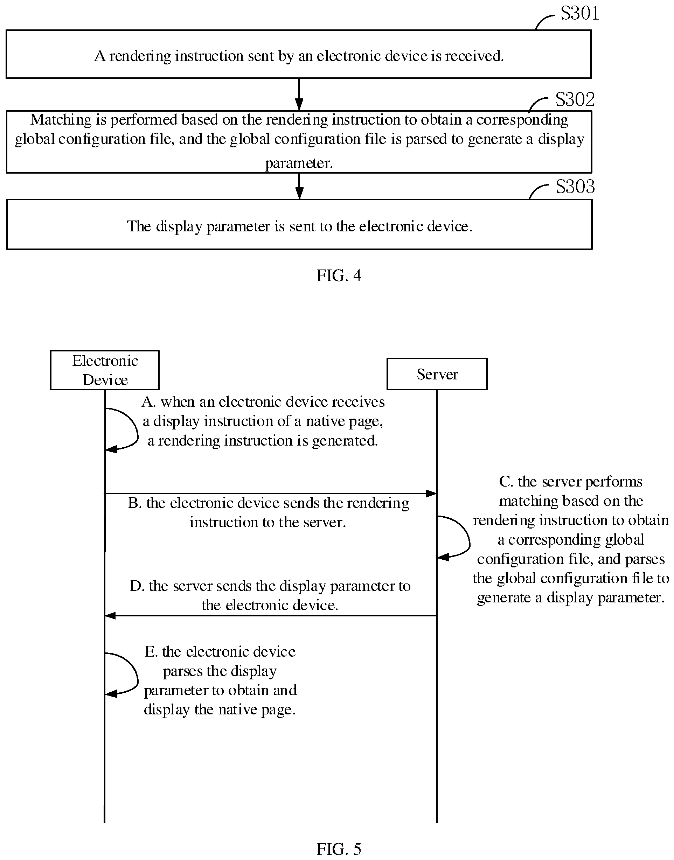

An embodiment of the present disclosure provides an information processing method. The information processing method is applied to a server and may include operations at blocks illustrated in FIG. 4.

At block S301, a rendering instruction sent by an electronic device is received.

The server may integrate a rendering engine and store a number of global configuration files corresponding to a number of quick applications. Each global configuration file corresponds to all display data in one quick application, that is, each global configuration file corresponds to the native page in one quick application. In some embodiments, each global configuration file is associated with the page identifier of the native page, that is, a corresponding global configuration file can be found through the page identifier.

Therefore, the server may receive the rendering instruction sent by the electronic device, and bind and store the rendering instruction and the international mobile equipment identity (IMEI) of the electronic device.

At block S302, matching is performed based on the rendering instruction to obtain a corresponding global configuration file, and the global configuration file is parsed to generate a display parameter.

The server may perform matching based on the page identifier in the rendering instruction, obtain the corresponding global configuration file, and parse the global configuration file through the integrated rendering engine to generate the display parameter that can be directly read by the electronic device. In some embodiments, the display parameter includes attribute information corresponding to generated controls. The attribute information includes logic and layout of the controls. The logic is a functional logic and the like of the controls. The layout is a display position, a display effect, and the like of the controls.

In some embodiments, the rendering instruction carries a page identifier, and the matching based on the rendering instruction to obtain the corresponding global configuration file, and parsing the global configuration file to generate the display parameter may include:
(1) matching based on the page identifier carried in the rendering instruction to obtain the corresponding global configuration file to the page identifier; and
(2) parsing the global configuration file based on a preset script framework to generate a corresponding display parameter including a command set.

Since an association relationship between the page identifier and the corresponding global configuration file is stored in the server, the server can match the page identifier carried by the rendering instruction to obtain the global configuration file associated with the page identifier, and parse the matched global configuration file through the integrated JavaScript script language framework in the server to generate the corresponding display parameter including the command set. The command set may be a number of character strings, and each character string may represent the display style and display position of one control.

At block S303, the display parameter is sent to the electronic device.

After the display parameter is generated, the server sends the display parameter directly readable by the electronic device to the electronic device corresponding to IMEI that needs to be rendered.

As can be seen from the above, the information processing method provided by the embodiments includes: receiving a rendering instruction sent by an electronic device; matching based on the rendering instruction to obtain a corresponding global configuration file, and parsing the global configuration file to generate a display parameter; and sending the display parameter to the electronic device. In this way, the server side matches the corresponding global configuration file based on the rendering instruction, and the server side parses the global configuration file and returns the display parameter to the electronic device, such that the electronic device may directly render the display parameter and generate the native page, which improves the rendering efficiency of the electronic device to the native page, and saves the rendering engine, thereby saving the storage space.

Referring to FIG. 5, which is a sequence view of an information processing method according to an embodiment of the present disclosure.

In operation A, when an electronic device receives a display instruction of a native page, a rendering instruction is generated.

For example, when a user opens a quick application on the electronic device for the first time, the electronic device receives the display instruction of the native page and generates the rendering instruction accordingly. The rendering instruction may carry a page identifier corresponding to the native page.

In operation B, the electronic device sends the rendering instruction to the server.

In operation C, the server performs matching based on the rendering instruction to obtain a corresponding global configuration file, and parses the global configuration file to generate a display parameter.

For example, the server matches the page identifier corresponding to the rendering instruction to obtain a corresponding global configuration file package, and parses through the JavaScript script language framework integrated in the server to generate the display parameter that can be directly read by the electronic device.

In operation D, the server sends the display parameter to the electronic device.

In operation E, the electronic device parses the display parameter to obtain and display the native page.

For example, after the electronic device receives the display parameter, since the display parameter is display parameter generated after the server side parses the global configuration file through the JavaScript script language framework, the parsed display parameter can be directly executed by a processor of the electronic device to generate a number of controls arranged in a certain layout, and then obtain and display the native page.

To facilitate better implementation of the information processing method provided by the embodiments of the present disclosure, the present disclosure also provides a device based on the above information processing method. The meaning of nouns is the same as that in the above information processing method. For specific implementation details, reference may be made to the description in the method embodiments.

An embodiment of the present disclosure provides an information processing device, applied to an electronic device and including:
a generating unit, configured to generate a rendering instruction in response to a display instruction of a native page being received.
a transceiver unit, configured to send the rendering instruction to a server and receive a display parameter returned by the server after parsing based on a global configuration file, the global configuration file being matched with the rendering instruction.
a display unit, configured to render the display parameter to obtain and display the native page.

In some embodiments, the rendering instruction carries a page identifier. The rendering instruction is sent to the server to cause the server to match a corresponding global configuration file based on the page identifier carried by the rendering instruction and parse the corresponding global configuration file. The display parameter generated by the server after the parsing the corresponding global configuration file is received.

In some embodiments, the transceiver unit is further specifically configured to: send the rendering instruction to the server to cause the server to match a corresponding global configuration file based on the page identifier carried by the rendering instruction and parse the corresponding global configuration file; and receive the display parameter generated by the server after parsing the corresponding global configuration file based on a preset script framework, the display parameter including a command set.

In some embodiments, the display unit is specifically configured to: traverse and render the command set in the display parameter based on a preset rule to obtain corresponding target information in order; and draw the target information in an order of acquisition time to obtain and display the native page.

In some embodiments, the display unit is further specifically configured to: render the display parameter to generate a plurality of controls with display effects corresponding to arranged display positions; wherein each of the plurality of controls contains specific functional logic to form and display the native page.

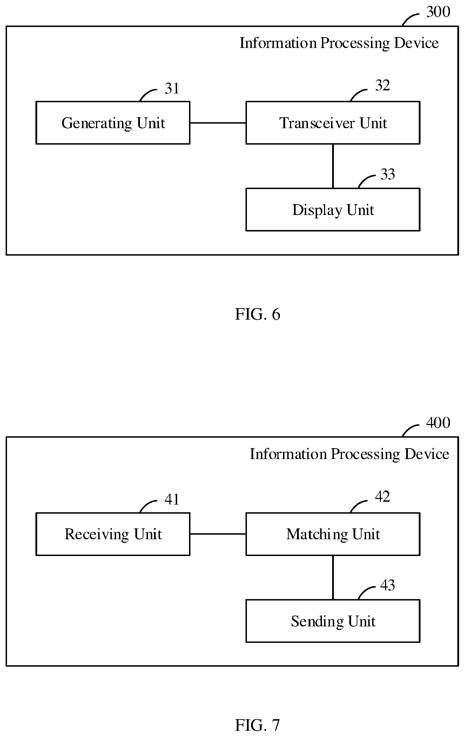

Refer to FIG. 6, which is a schematic block view of an information processing device according to an embodiment of the present disclosure. The information processing device is mainly integrated in an electronic device. Specifically, the information processing device 300 includes a generating unit 31, a transceiver unit 32, and a display unit 33.

The generating unit 31 is configured to generate a rendering instruction in response to a display instruction of a native page being received.

The native page may refer to the native page of an application opened by a quick application. The quick application refers to one that a user does not need to download and install, rather click and use, and enjoy the performance experience of the native application in real time, which can greatly save the storage space of the electronic device, and achieve a "slimming" effect on the electronic device.

Further, when the user performs the operation of opening the native page for the first time, the generating unit 31 generates and receives the display instruction of the native page, correspondingly generates the rendering instruction. The rendering instruction includes a page identifier of the native page to be generated.

The transceiver unit 32 is configured to send the rendering instruction to a server and receive a display parameter returned by the server after parsing based on the global configuration file matched with the rendering instruction.

In the embodiment of the present disclosure, after the rendering instruction is generated, the transceiver unit 32 sends the rendering instruction to the server, such that the server matches the corresponding global configuration file based on the page identifier indicated by the rendering instruction. The global configuration file is parsed via the rendering engine in the server, and the display parameter that can be directly read by the electronic device is generated. In some embodiments, the display parameter includes attribute information corresponding to generated controls. The attribute information includes logic and layout of the controls. The logic is a functional logic and the like of the controls. The layout is a display position, a display effect, and the like of the controls.

Further, after the server generates the display parameter, the server may return the display parameter to the electronic device to be received by the transceiver unit 32.

In some embodiments, the rendering instruction carries a page identifier, and the transceiver unit 32 is specifically configured to send the rendering instruction to the server to cause the server to match a corresponding global configuration file based on the page identifier carried by the rendering instruction and parse the corresponding global configuration file; and receive the display parameter generated by the server after the parsing the corresponding global configuration file.

In some embodiments, the transceiver unit 32 is further specifically configured to send the rendering instruction to the server to cause the server to match a corresponding global configuration file based on the page identifier carried by the rendering instruction and parse the corresponding global configuration file; and receive the display parameter generated by the server after parsing the corresponding global configuration file based on a preset script framework, the display parameter including a command set.

The display unit 33 is configured to parse the display parameter to obtain and display the native page.

After the transceiver unit 32 receives the display parameter, since the display parameter is display parameter generated after the server side parses the global configuration file through the rendering engine, the parsed display parameter can be directly executed by the display unit 33 to generate a number of controls arranged in a certain layout, and then obtain and display the native page.

In some embodiments, the display parameter includes attribute information corresponding to the generated controls. The attribute information includes the logic and layout of the controls. The logic is a functional logic and the like of the controls. The layout is a display position, a display effect, and the like of the controls. Therefore, after the display unit 33 rendering the display parameter, the controls with display effects corresponding to arranged display positions are generated, and each control contains specific functional logic. The controls of the display are combined to form and display the native page.

In some embodiments, the display unit 33 is specifically configured to traverse and render the command set in the display parameter based on a preset rule to obtain corresponding target information in order; and draw the target information in an order of acquisition time to obtain and display the native page.

As can be seen from the above, an information processing apparatus provided in the embodiments includes a generating unit 31 configured to generate a rendering instruction in response to a display instruction of a native page being received, a transceiver unit 32 configured to send the rendering instruction to a server and receive a display parameter returned by the server after parsing based on the global configuration file matched with the rendering instruction, and a display unit 33 configured to render the display parameter to obtain and display the native page. In this way, the server side matches the corresponding global configuration file based on the rendering instruction, and the server side parses the global configuration file and returns the display parameter to the electronic device, such that the electronic device may directly render the display parameter and generate the native page, which improves the rendering efficiency of the electronic device to the native page, and saves the rendering engine, thereby saving the storage space.

An embodiment of the present disclosure provides an information processing device, applied to a server and including:
a receiving unit, configured to receive a rendering instruction sent by an electronic device;
a matching unit, configured to match based on the rendering instruction to obtain a corresponding global configuration file, and parse the global configuration file to generate a display parameter; and
a sending unit, configured to send the display parameter to the electronic device.

Referring to FIG. 7, which is a schematic block view of an information processing device according to an embodiment of the present disclosure. The information processing device is mainly integrated in a server. Specifically, the information processing device 400 includes a receiving unit 41, a matching unit 42, and a sending unit 43.

The receiving unit 41 is configured to receive a rendering instruction sent by an electronic device.

The server may integrate a rendering engine and store a number of global configuration files corresponding to a number of quick applications. Each global configuration file corresponds to all display data in one quick application, that is, each global configuration file corresponds to the native page in one quick application. In some embodiments, each global configuration file is associated with the page identifier of the native page, that is, a corresponding global configuration file can be found through the page identifier.

Therefore, the receiving unit 41 may receive the rendering instruction sent by the electronic device, and bind and store the rendering instruction and the IMEI of the electronic device.

The matching unit 42 is configured to match based on the rendering instruction to obtain a corresponding global configuration file, and parse the global configuration file to generate a display parameter.

The matching unit 42 may perform matching based on the page identifier in the rendering instruction, obtain the corresponding global configuration file, and parse the global configuration file through the integrated rendering engine to generate the display parameter that can be directly read by the electronic device. In some embodiments, the display parameter includes attribute information corresponding to generated controls. The attribute information includes logic and layout of the controls. The logic is a functional logic and the like of the controls. The layout is a display position, a display effect, and the like of the controls.

In some embodiments, the matching unit 42 is specifically configured to match based on the page identifier carried in the rendering instruction to obtain the corresponding global configuration file to the page identifier; and parse the global configuration file based on a preset script framework to generate a corresponding display parameter including a command set.

The sending unit 43 is configured to send the display parameter to the electronic device.

After the display parameter are generated, the sending unit 43 sends the display parameter directly readable by the electronic device to the electronic device corresponding to IMEI that needs to be rendered.

As can be seen from the above, an information processing apparatus provided in the embodiments includes: a receiving unit 41 configured to receive a rendering instruction sent by an electronic device, a matching unit 42 configured to match based on the rendering instruction to obtain a corresponding global configuration file and parse the global configuration file to generate a display parameter, and a sending unit 4 configured to send the display parameter to the electronic device. In this way, the server side matches the corresponding global configuration file based on the rendering instruction, and the server side parses the global configuration file and returns the display parameter to the electronic device, such that the electronic device may directly render the display parameter and generate the native page, which improves the rendering efficiency of the electronic device to the native page, and saves the rendering engine, thereby saving the storage space.

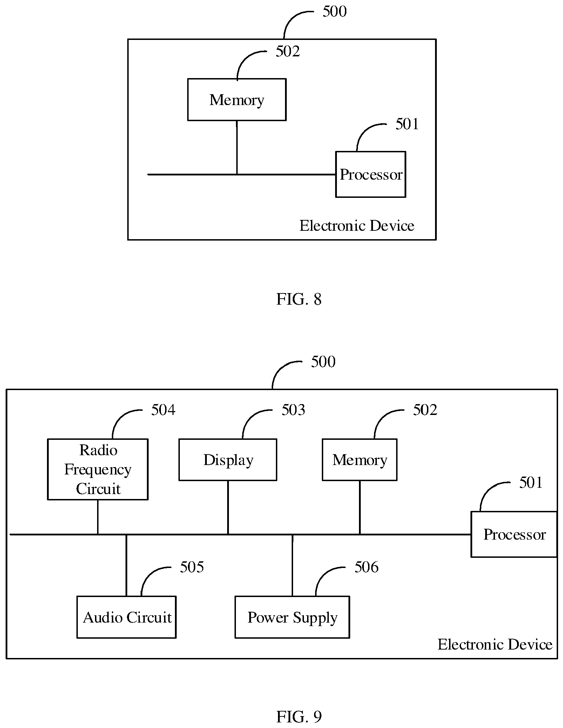

An embodiment of the present disclosure also provides an electronic device. Referring to FIG. 8, the electronic device 500 includes a processor 501 and a memory 502. The processor 501 and the memory 502 are electrically connected.

The processor 500 is the control center of the electronic device 500, using various interfaces and lines to connect the various parts of the entire electronic device. The processor 501 executes or loads the computer program stored in the memory 502, and calls the data stored in the memory 502 to perform various functions of the electronic device 500 and process data to perform overall monitoring of the electronic device 500.

The memory 502 may be configured to store software programs and modules. The processor 501 runs computer programs and modules stored in the memory 502 to execute various functional applications and data processing. The memory 502 may mainly include a storage program area and a storage data area. The storage program area may store an operating system, computer programs required by at least one function (such as a sound playback function, an image playback function, etc.), etc. The storage data area may store data created by the use of the electronic device, etc. In addition, the memory 502 may include a high-speed random access memory, and may also include a non-volatile memory, such as at least one magnetic disk storage device, a flash memory device, or other volatile solid-state storage devices. Accordingly, the memory 502 may further include a memory controller to provide the processor 501 with access to the memory 502.

In the embodiment of the present disclosure, the processor 501 in the electronic device 500 will load the instructions corresponding to the process of one or more computer programs into the memory 502 according to the following operations, and the processor 501 executes the computer programs stored in the memory 502 to achieve various functions.

A rendering instruction is generated in response to a display instruction of a native page being received.

The rendering instruction is sent to a server, and a display parameter returned by the server after parsing based on a global configuration file is received, the global configuration file being matched with the rendering instruction.

The native page is obtained by parsing the display parameter and the native page is displayed.

In some embodiments, the rendering instruction carries a page identifier, and when performing the sending the rendering instruction to the server, and receiving the display parameter returned by the server after parsing based on the global configuration file, the processor 501 may further perform:
sending the rendering instruction to the server to cause the server to match a corresponding global configuration file based on the page identifier carried by the rendering instruction and parse the corresponding global configuration file; and
receiving the display parameter generated by the server after the parsing the corresponding global configuration file.

In some embodiments, when performing the receiving the display parameter generated by the server after the parsing the corresponding global configuration file, the processor 501 may further perform:
receiving the display parameter generated by the server after parsing the corresponding global configuration file based on a preset script framework, the display parameter including a command set.

In some embodiments, when performing the parsing the display parameter to obtain and display the native page, the processor 501 may further perform:
traversing and rendering the command set in the display parameter based on a preset rule to obtain corresponding target information in order; and
drawing the target information in an order of acquisition time to obtain and display the native page.

In some embodiments, when performing the parsing the display parameter to obtain and display the native page, the processor 501 may further perform:
rendering the display parameter to generate a plurality of controls with display effects corresponding to arranged display positions; wherein each of the plurality of controls contains specific functional logic to form and display the native page.

As can be seen from the above, in the electronic device of the embodiments of the present disclosure, a rendering instruction is generated in response to a display instruction of a native page being received; the rendering instruction is sent to a server, and a display parameter returned by the server after parsing based on a global configuration file is received, the global configuration file being matched with the rendering instruction; the display parameter is rendered to obtain and display the native page. In this way, when receiving the display instruction of the native page, the rendering instruction is sent to the server, such that the server side matches the corresponding global configuration file based on the rendering instruction, and the server side parses the global configuration file and returns the display parameter to directly render the display parameter and generate the native page, which improves the rendering efficiency of the electronic device to the native page, and saves the rendering engine, thereby saving the storage space.

Further referring to FIG. 9, in some embodiments, the electronic device 500 may further include: a display 503, a radio frequency circuit 504, an audio circuit 505, and a power supply 506. The display 503, the radio frequency circuit 504, the audio circuit 505, and the power supply 506 are electrically connected to the processor 501, respectively.

The display 503 may be configured to display information input by a user or provided to the user and various graphical user interfaces, which may include graphics, text, icons, video, and any combination thereof. The display 503 may include a display panel. In some embodiments, the display panel may be configured in the form of a liquid crystal display (LCD) or an organic light-emitting diode (OLED).

The radio frequency circuit 504 may be configured to send and receive radio frequency signals to establish wireless communication with network devices or other electronic devices through wireless communication, and send and receive signals with network devices or other electronic devices.

The audio circuit 505 may be configured to provide an audio interface between the user and the electronic device through a speaker or a microphone.

The power supply 506 may be configured to power various components of the electronic device 500. In some embodiments, the power supply 506 may be logically connected to the processor 501 through a power management system to realize functions such as managing charging, discharging, and power consumption management through the power management system.

Although not shown in FIG. 9, the electronic device 500 may further include a camera, a Bluetooth module, and so on, and details are not described herein again.

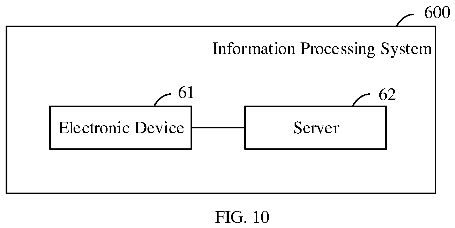

Referring to FIG. 10, which is a schematic block view of an information processing system according to an embodiment of the present disclosure.

Specifically, the information processing system 600 includes an electronic device 61 and a server 62.

The electronic device 61 is configured to generate a rendering instruction in response to a display instruction of a native page being received; send the rendering instruction to a server, and receive a display parameter returned by the server after parsing based on a global configuration file, the global configuration file being matched with the rendering instruction; and parse the display parameter to obtain and display the native page.

The server 62 is configured to receive a rendering instruction sent by an electronic device; match based on the rendering instruction to obtain a corresponding global configuration file, and parse the global configuration file to generate a display parameter; and send the display parameter to the electronic device.

Since the electronic device 61 and the server 62 can execute any of the information processing methods provided in the embodiments of the present disclosure, the specific implementation process is described in the above information processing method embodiments in detail, and will not be repeated here.

An embodiment of the present disclosure further provides a storage medium that stores a computer program, and when the computer program runs on a computer, the computer is caused to execute the information processing method in any of the foregoing embodiments, for example, generating a rendering instruction in response to a display instruction of a native page being received; sending the rendering instruction to a server, and receiving a display parameter returned by the server after parsing based on a global configuration file, the global configuration file being matched with the rendering instruction; and rendering the display parameter to obtain and display the native page. Or, receiving a rendering instruction sent by an electronic device; matching based on the rendering instruction to obtain a corresponding global configuration file, and parsing the global configuration file to generate a display parameter; and sending the display parameter to the electronic device.

In the embodiment of the present disclosure, the storage medium may be a magnetic disk, an optical disk, a read-only memory (ROM), or a random access memory (RAM), or the like.

In the above embodiments, the description of each embodiment has its own emphasis. For a part that is not detailed in some embodiments, reference may be made to related descriptions of other embodiments.

It should be noted that, for the information processing method of the embodiments of the present disclosure, those skilled in the art can understand that all or part of the process of implementing the information processing method of the embodiments of the present disclosure can be completed by controlling relevant hardware through a computer program. The computer program may be stored in a computer-readable storage medium, such as stored in the memory of the electronic device, and executed by at least one processor in the electronic device. In the process of execution, embodiments of the information processing method may be included. The storage medium may be a magnetic disk, an optical disk, a read-only memory, a random access memory, or the like.

For the information processing device of the embodiment of the present disclosure, each functional module may be integrated into one processing chip, or each module may exist alone physically, or two or more modules may be integrated into one module. The above integrated modules may be implemented in the form of hardware or software function modules. If the integrated module is implemented in the form of a software function module and sold or used as an independent product, it can also be stored in a computer-readable storage medium, such as a read-only memory, a magnetic disk, or an optical disk.

The information processing method, device, storage medium, electronic device, and system provided by the embodiments of the present disclosure are described in detail above. Specific examples are given herein to explain the principles and implementation modes of the present disclosure. The description is only to help understand the method and the core idea of the present disclosure. For those skilled in the art, according to the idea of the present disclosure, there will be changes in the specific implementation and application scope. The content of this specification should not be construed as a limitation of the present disclosure.

## Claims

1. An information processing method, applied to an electronic device and **characterized by** comprising:
generating a rendering instruction in response to a display instruction of a native page being received;
sending the rendering instruction to a server, and receiving a display parameter returned by the server after parsing based on a global configuration file, the global configuration file being matched with the rendering instruction; and
obtaining the native page by rendering the display parameter, and displaying the native page.

2. The method according to claim 1, wherein the rendering instruction carries a page identifier, and the sending the rendering instruction to the server, and receiving the display parameter returned by the server after parsing based on the global configuration file comprise:
sending the rendering instruction to the server to cause the server to match a corresponding global configuration file based on the page identifier carried by the rendering instruction and parse the corresponding global configuration file; and
receiving the display parameter generated by parsing the corresponding global configuration file by the server.

3. The method according to claim 2, wherein the receiving the display parameter generated by the server after the parsing the corresponding global configuration file comprises:
receiving the display parameter generated by parsing the corresponding global configuration file based on a preset script framework by the server, the display parameter comprising a command set.

4. The method according to claim 3, wherein the obtaining the native page by rendering the display parameter and displaying the native page comprise:
obtaining target information in order by traversing and rendering the command set in the display parameter based on a preset rule; and
obtaining the native page by drawing the target information in an order of acquisition time and displaying the native page.

5. The method according to claim 1, wherein the obtaining the native page by rendering the display parameter and displaying the native page comprises:
generating a plurality of controls with display effects corresponding to display positions by rendering the display parameter, wherein each of the plurality of controls comprises functional logic; and
obtaining the native page according to the plurality of controls and displaying the native page.

6. An information processing method, applied to a server and **characterized by** comprising:
receiving a rendering instruction sent by an electronic device;
obtaining a global configuration file corresponding to the rendering instruction by matching, and generating a display parameter by parsing the corresponding global configuration file; and
sending the display parameter to the electronic device.

7. The method according to claim 6, wherein the rendering instruction carries a page identifier, and the obtaining a global configuration file corresponding to the rendering instruction by matching, and generating a display parameter by parsing the corresponding global configuration file comprise:
obtaining the global configuration file corresponding to the page identifier; and
generating the display parameter by parsing the corresponding global configuration file based on a preset script framework, wherein the display parameter comprises a command set.

8. An information processing device, applied to an electronic device and comprising:
a generating unit, configured to generate a rendering instruction in response to a display instruction of a native page being received;
a transceiver unit, configured to send the rendering instruction to a server and receive a display parameter returned by the server after parsing based on a global configuration file, the global configuration file being matched with the rendering instruction; and
a display unit, configured to render the display parameter to obtain and display the native page.

9. The information processing device according to claim 8, wherein the rendering instruction carries a page identifier; the transceiver unit is further configured to:
send the rendering instruction to the server to cause the server to match a corresponding global configuration file based on the page identifier carried by the rendering instruction and parse the corresponding global configuration file; and
receive the display parameter generated by the server after the parsing the corresponding global configuration file.

10. The information processing device according to claim 9, wherein the transceiver unit is further configured to:
send the rendering instruction to the server to cause the server to match a corresponding global configuration file based on the page identifier carried by the rendering instruction and parse the corresponding global configuration file; and
receive the display parameter generated by the server after parsing the corresponding global configuration file based on a preset script framework, the display parameter comprising a command set.

11. The information processing device according to claim 10, wherein the display unit is further configured to:
traverse and render the command set in the display parameter based on a preset rule to obtain corresponding target information in order; and
draw the target information in an order of acquisition time to obtain and display the native page.

12. The information processing device according to claim 8, wherein the display unit is further configured to:
render the display parameter to generate a plurality of controls with display effects corresponding to arranged display positions; wherein each of the plurality of controls contains specific functional logic to form and display the native page.

13. An information processing device, applied to a server and comprising:
a receiving unit, configured to receive a rendering instruction sent by an electronic device;
a matching unit, configured to match based on the rendering instruction to obtain a corresponding global configuration file, and parse the global configuration file to generate a display parameter; and
a sending unit, configured to send the display parameter to the electronic device.

14. A storage medium, storing a computer program, wherein the computer program is executed on a computer to cause the computer to perform the information processing method according to claim 1 or the information processing method according to claim 6.

15. An electronic device, **characterized by** comprising a memory and a processor, wherein the processor is capable of calling a computer program stored in the memory to perform:
generating a rendering instruction in response to a display instruction of a native page being received;
sending the rendering instruction to a server, and receiving a display parameter returned by the server after parsing based on a global configuration file, the global configuration file being matched with the rendering instruction; and
rendering the display parameter to obtain and display the native page.

16. The electronic device according to claim 15, wherein the processor, by calling the computer program stored in the memory, is further configured to perform:
sending the rendering instruction to the server to cause the server to match a corresponding global configuration file based on a page identifier carried by the rendering instruction and parse the corresponding global configuration file; and
receiving the display parameter generated by the server after the parsing the corresponding global configuration file.

17. The electronic device according to claim 16, wherein the processor, by calling the computer program stored in the memory, is further configured to perform:
receiving the display parameter generated by the server after parsing the corresponding global configuration file based on a preset script framework, the display parameter comprising a command set.

18. The electronic device according to claim 17, wherein the processor, by calling the computer program stored in the memory, is further configured to perform:
traversing and rendering the command set in the display parameter based on a preset rule to obtain corresponding target information in order; and
drawing the target information in an order of acquisition time to obtain and display the native page.

19. The electronic device according to claim 15, wherein the processor, by calling the computer program stored in the memory, is further configured to perform:
rendering the display parameter to generate a plurality of controls with display effects corresponding to arranged display positions; wherein each of the plurality of controls contains specific functional logic to form and display the native page.

20. An information processing system, comprising an electronic device and a server; wherein the electronic device comprises the information processing device according to claim 8 and the server comprises the information processing device according to claim 13.
